(19) Europäisches Patentamt
European Patent Office
Office européen des brevets

(11) **EP 4 500 099 B1**

(12) **EUROPÄISCHE PATENTSCHRIFT**

(45) Veröffentlichungstag und Bekanntmachung des Hinweises auf die Patenterteilung:
**17.09.2025 Patentblatt 2025/38**

(21) Anmeldenummer: **23715229.3**

(22) Anmeldetag: **16.03.2023**

(51) Internationale Patentklassifikation (IPC):
**F25D 11/00** *(2006.01)*

(52) Gemeinsame Patentklassifikation (CPC):
**F25D 11/003**; F25D 2201/10; F25D 2303/083; F25D 2700/12; F25D 2700/14

(86) Internationale Anmeldenummer:
**PCT/IB2023/052559**

(87) Internationale Veröffentlichungsnummer:
**WO 2023/187531 (05.10.2023 Gazette 2023/40)**

(54) **VERFAHREN ZUR ÜBERWACHUNG DER THERMISCHEN LEISTUNGSFÄHIGKEIT EINES TEMPERATURKONTROLLIERTEN TRANSPORTBEHÄLTERS**

METHOD FOR MONITORING THERMAL PERFORMANCE OF A TEMPERATURE CONTROLLED TRANSPORT CONTAINER

PROCÉDÉ DE SURVEILLANCE DE LA PERFORMANCE THERMIQUE D'UN CONTENEUR DE TRANSPORT À TEMPÉRATURE RÉGULÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.03.2022 AT 792022**

(43) Veröffentlichungstag der Anmeldung:
**05.02.2025 Patentblatt 2025/06**

(73) Patentinhaber: **REP IP AG**
**6300 Zug (CH)**

(72) Erfinder:
• **ROS, Nico**
**4125 Riehen (CH)**
• **RETZKO, Stefan**
**8037 Zürich (CH)**

(74) Vertreter: **SONN Patentanwälte GmbH & Co KG**
**Riemergasse 14**
**1010 Wien (AT)**

(56) Entgegenhaltungen:
WO-A1-2021/063877    WO-A1-2022/054024
CN-U- 210 269 677    DE-A1- 102018 125 943

• **TAN PEPE ET AL: "Correction of the enthalpy-temperature curve of phase change materials obtained from the T-History method based on a transient heat conduction model", INTERNATIONAL JOURNAL OF HEAT AND MASS TRANSFER, ELSEVIER, AMSTERDAM, NL, vol. 105, 14 October 2016 (2016-10-14), pages 573 - 588, XP029818637, ISSN: 0017-9310, DOI: 10.1016/J.IJHEATMASSTRANSFER.2016.10.001**

**Beschreibung**

Die Erfindung betrifft ein Verfahren zur Überwachung der thermischen Leistungsfähigkeit eines temperaturkontrollierten Transportbehälters.

Die Erfindung betrifft weiters ein System zur Überwachung der thermischen Leistungsfähigkeit eines temperaturkontrollierten Transportbehälters, umfassend einen Transportbehälter und eine Recheneinheit.

Beim Transport von temperaturempfindlichem Transportgut, wie z.B. Arzneimitteln, über Zeiträume von mehreren Tagen müssen vorgegebene Temperaturbereiche bei der Lagerung und dem Transport eingehalten werden, um die Verwendbarkeit und die Sicherheit des Transportguts zu gewährleisten. Für verschiedene Arzneimittel sind Temperaturbereiche von 2 bis 25°C, insbesondere 2 bis 8°C oder 15 bis 25°C, als Lager- und Transportbedingungen festgeschrieben.

Damit der gewünschte Temperaturbereich des Transportguts beim Transport permanent und nachweislich eingehalten wird, werden Transportcontainer, z.B. Luftfrachtcontainer, mit besonderem Isolationsvermögen eingesetzt. Aus dem Stand der Technik sind Container bekannt, deren Containerwände eine thermische Isolationsschicht umfassen und die mit passiven Temperierelementen ausgestattet sind. Für die Isolation werden schichtweise Wandaufbauten aus Standarddämmmaterial wie z.B. EPS, PIR oder XPS sowie Hochleistungsdämmung wie z.B. Vakuumpaneele (VIP) verwendet. Passive Temperierelemente erfordern während der Anwendung keine externe Energiezufuhr, sondern nützen ihre Wärmespeicherkapazität, wobei es je nach Temperaturniveau zu einer Abgabe oder einer Aufnahme von Wärme an den bzw. aus dem zu temperierenden Transportbehälterinnenraum kommt. Solche passiven Temperierelemente sind erschöpft, sobald der Temperaturausgleich mit dem Transportbehälterinnenraum abgeschlossen ist.

Eine besondere Form von passiven Temperierelementen sind Latentwärmespeicher, die thermische Energie in Phasenwechselmaterialien speichern können, deren latente Schmelzwärme, Lösungswärme oder Absorptionswärme wesentlich größer ist als die Wärme, die sie aufgrund ihrer normalen spezifischen Wärmekapazität speichern können.

Für die Planung von temperaturkontrollierten Frachttransporten ist die Kenntnis der thermischen Leistungsfähigkeit der Transportbehälter von wesentlicher Bedeutung. Üblicherweise wird die thermische Leistungsfähigkeit temperaturkontrollierter Transportbehälter mit passiven Kühlsystemen in dedizierten Validierungsmessungen bestimmt. Dabei wird in einer zertifizierten Klimakammer ein Temperaturprofil im gewünschten Bereich abgefahren und die Änderung der Temperatur im Inneren des Transportbehälters mit mehreren Messfühlern gemessen. Dies ergibt sehr genaue Daten über die Leistungsfähigkeit des betreffenden Behälters.

Der Nachteil ist jedoch, dass diese Validierungsmessungen relativ zeit- und kostenaufwändig sind und somit nicht für jeden einzelnen Transportbehälter durchgeführt werden können. Die typischerweise auftretenden Streuungen der Wärmeleitfähigkeit der Isolation sowie der Enthalpie des Latentwärmespeichers werden nicht berücksichtigt. Außerdem werden die Validierungsmessungen nur einmal durchgeführt und stellen somit nur Momentaufnahmen für einzelne Behälter dar. Zeitliche Änderungen der Wärmeleitfähigkeit der Isolation (z.B. durch eine Erhöhung des Vakuumdrucks von Vakuumpaneelen in Folge einer Beschädigung) oder der Enthalpie des Latentwärmespeichers werden nicht detektiert.

Dies führt dazu, dass Leistungsvorhersagen mit großen Sicherheitsfaktoren beaufschlagt werden müssen oder dass im schlimmsten Fall der garantierte Temperaturbereich nicht gehalten werden kann.

Die Veröffentlichung WO 2022/054024 A1 zeigt und beschreibt ein Verfahren zur Berechnung der Dämmleistung einer Behälterwand. Ein Verfahren zur Berechnung der Enthalpie eines Phasenwechselmaterials ist beispielsweise in TAN PEPE ET AL: "Correction of the enthalpy-temperature curve of phase change materials obtained from the T-History method based on a transient heat conduction model",INTERNATIONAL JOURNAL OF HEAT AND MASS TRANSFER, ELSEVIER, AMSTERDAM, NL, Bd. 105, 14. Oktober 2016 (2016-10-14), Seiten 573-588 offenbart.

Mit der vorliegenden Erfindung soll es ermöglicht werden, die thermische Leistungsfähigkeit aller Transportbehälter der eingesetzten Flotte laufend zu überwachen. Dabei soll sowohl die Wärmeleitfähigkeit der Isolation als auch die Enthalpie des Latentwärmespeichers mit einfachen Mitteln bestimmt werden können. Die Überwachung soll im Rahmen des Standardbetriebs möglich sein ohne dass zusätzliche Instrumentierungen eingesetzt werden müssen.

Die Aufgabe wird durch ein Verfahren gemäß dem unabhängigen Anspruch 1 und ein System gemäß dem unabhängigen Anspruch 7 gelöst. Demgemäß sieht die Erfindung ein Verfahren zur Überwachung der thermischen Leistungsfähigkeit eines temperaturkontrollierten Transportbehälters vor, wobei der Transportbehälter eine Behälterwandung und einen von der Behälterwandung umgebenen Innenraum aufweist, wobei die Behälterwandung eine den Innenraum allseitig umgebende thermische Isolationsschicht und eine Latentwärmespeicherschicht umfasst, wobei die Latentwärmespeicherschicht ein Phasenwechselmaterial mit einer Phasenwechseltemperatur aufweist, und wobei ein Außentemperatursensor für die Messung der Umgebungstemperatur des Transportbehälters und ein Innentemperatursensor für die Messung der Innenraumtemperatur vorgesehen sind, wobei die Umgebungstemperatur und die Innenraumtemperatur während eines ersten Zeitraums gemessen und aufgezeichnet werden, in dem die Innenraumtemperatur einen ersten Temperaturbereich durchläuft, und die Umgebungstemperatur und die Innenraumtemperatur während eines zweiten Zeitraums gemessen und aufgezeichnet werden, in dem die Innenraumtemperatur einen zweiten Temperaturbereich durchläuft, wobei die Phasenwechseltemperatur im ersten Temperaturbereich liegt und der zweite Temperaturbereich oberhalb oder unterhalb des ersten Temperaturbereichs liegt, wobei aus der zeitlichen Änderung der Innenraumtemperatur relativ zur Umgebungstemperatur während des Durchlaufens des zweiten Temperaturbereichs die Wärmeleitfähigkeit der Isolationsschicht errechnet wird und wobei danach aus der zeitlichen Änderung der Innenraumtemperatur relativ zur Umgebungstemperatur während des Durchlaufens des ersten Temperaturbereichs und aus der Wärmeleitfähigkeit der Isolationsschicht die Enthalpie des Phasenwechselmaterials errechnet wird.

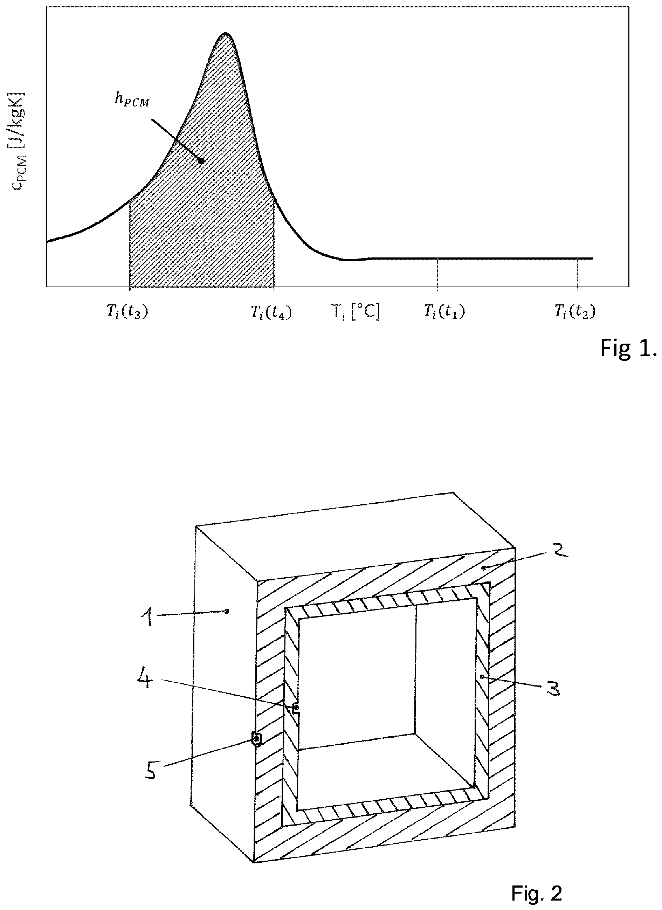

Die Erfindung beruht somit auf der Idee, die Einflüsse der Wärmeleitfähigkeit der Isolationsschicht und der Enthalpie des Latentwärmespeichers auf die thermische Leistungsfähigkeit getrennt voneinander zu betrachten, indem für die Messungen zwei unterschiedliche Temperaturbereiche berücksichtigt werden. Hierzu wurde die Verteilung der spezifischen Wärmekapazität des Phasenwechselmaterials über der Temperatur genauer betrachtet. Die spezifische Wärmekapazität weist ein Maximum auf, welches durch den Phasenwechsel und die dafür nötige Schmelzwärme gegeben ist (siehe Fig. 1). Diejenige Temperatur, bei welcher das genannte Maximum auftritt, wird hierbei als die Phasenwechseltemperatur des Phasenwechselmaterials betrachtet. Je nach Anwendungsbereich des Transportbehälters wird das Phasenwechselmaterial so ausgewählt, dass sich dieses Maximum innerhalb des Betriebstemperaturintervalls befindet. Typischerweise tritt in diesem Bereich (auch als "erster Temperaturbereich" bezeichnet) allerdings auch die höchste Streuung zwischen den einzelnen Herstellungschargen des Phasenwechselmaterials auf. Die Kenntnis der Enthalpie (Integral der Wärmekapazitätskurve) des Phasenwechselmaterials im Betriebstemperaturintervall ist entscheidend für eine genaue Vorhersage der thermischen Leistungsfähigkeit des Transportbehälters.

Ober- oder unterhalb des Phasenwechsels ist die Wärmekapazität des Phasenwechselmaterials konstant und weist nur geringe Streuungen zwischen einzelnen Herstellungschargen auf. Daher eignet sich dieser Bereich (auch als "zweiter Temperaturbereich" bezeichnet) zur Berechnung der Wärmeleitfähigkeit der Isolation. In Fig. 1 ist die Verteilung der spezifischen Wärmekapazität eines Phasenwechselmaterials exemplarisch dargestellt. Ein geeigneter Bereich zur Messung der Wärmeleitfähigkeit der Isolation befindet sich zwischen $Ti(t_1)$ und $Ti(t_2)$. Sobald die Wärmeleitfähigkeit der Isolation bekannt ist, kann unter Verwendung der bei einer weiteren Messung zwischen $Ti(t_3)$ und $Ti(t_4)$ erhaltenen Messwerte die Enthalpie des Latentwärmespeichers bestimmt werden. Dabei ist bevorzugt vorgesehen, dass sich der von $Ti(t_3)$ bis $Ti(t_4)$ erstreckende erste Temperaturbereich von einer Temperatur von 1-4°C unterhalb der Phasenwechseltemperatur bis zu einer Temperatur von 1-4°C oberhalb der Phasenwechseltemperatur erstreckt.

Am besten geeignet für die Bestimmung der thermischen Leistungsfähigkeit sind Betriebszustände, in denen der Behälter geschlossen und leer ist. Eine bevorzugte Vorgehensweise zur Durchführung des erfindungsgemäßen Verfahrens sieht daher vor, dass die Messung der Umgebungstemperatur und der Innenraumtemperatur begonnen wird, nachdem Sensorinformationen erhalten worden sind, wonach der Transportbehälter geschlossen und leer ist. Als geeigneter Sensor zur Erfassung des Öffnungs- oder Schließzustands kann beispielsweise ein Türkontakt und/oder ein im Inneren des Behälters angeordneter Lichtsensor zum Einsatz gelangen. Als geeigneter Sensor zur Erfassung des Leerzustands kann beispielsweise ein Gewichtssensor zum Einsatz gelangen.

Außerdem ist es vorteilhaft, wenn die Messungen durchgeführt werden, solange ein deutlicher Temperaturunterschied zwischen der Innenraum- und der Umgebungstemperatur vorhanden ist. Eine bevorzugte Vorgehensweise zur Durchführung des erfindungsgemäßen Verfahrens sieht daher vor, dass die Messung der Umgebungstemperatur und der Innenraumtemperatur durchgeführt wird, während die Differenz zwischen der Umgebungstemperatur und der Innenraumtemperatur mindestens 10 K beträgt.

Die Auswertung der beiden Messungen erfolgt automatisch, z.B. durch ein Computerprogramm, welches erkennt, sobald sich der Transportbehälter in geschlossenem und leerem Zustand befindet und die jeweiligen Temperaturbereiche durchfahren werden. Im normalen Betriebszyklus ist dies z.B. beim Rücktransport des Transportbehälters nach einer Medikamentenlieferung der Fall.

Mit der vorliegenden Erfindung kann somit eine fortwährende Überwachung der Leistungsfähigkeit aller eingesetzten Transportbehälter während des laufenden Betriebs durchgeführt werden, wobei sowohl die Wärmeleitfähigkeit der Isolation als auch die Enthalpie des Latentwärmespeichers bestimmt werden. Dies ermöglicht zum einen eine Unterscheidung der Leistungsfähigkeit jedes einzelnen Behälters, welche z.B. durch eine Leistungskennzahl angegeben werden kann, und zum anderen können Beschädigungen der Isolation durch eine Veränderung der thermischen Leistungsfähigkeit erkannt und die betroffenen Behälter repariert werden.

Dadurch ergeben sich entscheidende Vorteile gegenüber der herkömmlichen Vorgehensweise. Die Sicherheitsfaktoren in Laufzeitvorhersagen der Transportbehälter können reduziert werden und die thermische Leitungsfähigkeit der Behälterflotte kann besser ausgenutzt werden.

Gemäß einer bevorzugten Ausführung der Erfindung kann die Ermittlung der Wärmeleitfähigkeit der Isolationsschicht für zumindest eine der Wände der Behälterwandung gesondert von den anderen Wänden vorgenommen werden. Besonders bevorzugt wird der Wärmeleitfähigkeit der Isolationsschicht für jede Wand der Behälterwandung gesondert vorgenommen. Zu diesem Zweck werden der oder den gesondert zu erfassenden Wand bzw. Wänden jeweils ein eigener Innentemperatursensor zugeordnet, dessen Messwerte für die Ermittlung der Wärmeleitfähigkeit der dieser Wand zugehörigen Isolationsschicht herangezogen werden.

Der Innentemperatursensor ist bevorzugt an der dem Innenraum zugewandten Fläche der Behälterwandung oder in einer Ausnehmung dieser Fläche angeordnet oder befestigt.

Weiterhin betrifft die Erfindung ein System zur Überwachung der thermischen Leistungsfähigkeit eines temperaturkontrollierten Transportbehälters, umfassend

- einen Transportbehälter mit einer Behälterwandung und einem von der Behälterwandung umgebenen Innenraum, wobei die Behälterwandung eine den Innenraum allseitig umgebende thermische Isolationsschicht und eine Latentwärmespeicherschicht umfasst, wobei die Latentwärmespeicherschicht ein Phasenwechselmaterial mit einer Phasenwechseltemperatur aufweist, und wobei der Transportbehälter einen Außentemperatursensor für die Messung der Umgebungstemperatur des Transportbehälters und ein Innentemperatursensor für die Messung der Innenraumtemperatur aufweist, und wobei der Transportbehälter einen Messwertspeicher aufweist, dem die Messwerte des Außentemperatursensors und des Innentemperatursensors zugeführt sind, die während eines ersten Zeitraums gemessen werden, in dem die Innenraumtemperatur einen ersten Temperaturbereich durchläuft, und die während eines zweiten Zeitraums gemessen werden, in dem die Innenraumtemperatur einen zweiten Temperaturbereich durchläuft, wobei die Phasenwechseltemperatur im ersten Temperaturbereich liegt und der zweite Temperaturbereich oberhalb oder unterhalb des ersten Temperaturbereichs liegt, und
- eine Recheneinheit zur Auswertung der Messdaten,

wobei der Transportbehälter und die Recheneinheit jeweils eine Datenübertragungsschnittstelle aufweisen, über welche die Messwerte aus dem Messwertspeicher des Transportbehälters an die Recheneinheit übermittelt werden, und wobei die Recheneinheit eingerichtet ist, um aus der zeitlichen Änderung der Innenraumtemperatur relativ zur Umgebungstemperatur während des Durchlaufens des zweiten Temperaturbereichs die Wärmeleitfähigkeit der Isolationsschicht zu errechnen und danach aus der zeitlichen Änderung der Innenraumtemperatur relativ zur Umgebungstemperatur während des Durchlaufens des ersten Temperaturbereichs und aus der Wärmeleitfähigkeit der Isolationsschicht die Enthalpie des Phasenwechselmaterials zu errechnen.

Die Recheneinheit kann hierbei im Transportbehälter angeordnet sein. Alternativ kann die Recheneinheit als gesonderte bzw. entfernte Einheit angeordnet sein. Die entfernte Einheit kann beispielswiese in einem zentralen Rechenzentrum angeordnet sein, in welchem Zustands-, Orts- und Sensordaten aller Transportcontainer einer Containerflotte empfangen und ausgewertet werden.

Die Datenübertragungsschnittstelle des Transportbehälters und der Recheneinheit können hierbei in Abhängigkeit von den jeweiligen Erfordernisse ausgebildet sein. Wenn die Recheneinheit in den Transportbehälter integriert ist, können die Datenübertragungsschnittstellen für die drahtgebundene Übertragung der Messwerte ausgebildet und im einfachsten Fall als elektrische Kontakte ausgeführt sein. Wenn die Recheneinheit als gesonderte Einheit ausgebildet ist, können die Datenübertragungsschnittstellen für die drahtlose Datenübermittlung ausgebildet sein, z.B. über RFID, Bluetooth oder über ein Mobilfunknetz. Die Datenübermittlung vom Transportbehälter an die Recheneinheit muss außerdem nicht direkt erfolgen, sondern kann über zwischengeschaltete Einheiten, wie z.B. Netzwerkkomponenten, Zwischenspeicher, Datenausleseeinheiten oder dgl., vorgenommen werden. Hinsichtlich der den Innenraum allseitig umgebenden thermischen Isolationsschicht ist diese so ausgebildet, dass sie den Energiefluss in radialer Richtung zum Innenraum des Transportbehälters hin reduziert. Die Isolationsschicht kann eine Wärmeleitfähigkeit von < 0,02 W/(m.K), bevorzugt < 0,012 W/(m.K), aufweisen. Die Isolationsschicht besteht bevorzugt aus Vakuumdämmplatten (VIP).

Hinsichtlich der im Transportbehälter des erfindungsgemäßen Systems angeordneten Latentwärmespeicherschicht wird vorzugsweise ein Phasenwechselmaterial mit einer Phasenübergangstemperatur ausgewählt, die auf den im Innenraum des Transportbehälters gewünschten Temperaturbereich abgestimmt ist, sodass der gewünschte Temperaturbereich möglichst stabil und unabhängig von der Außentemperatur gehalten werden kann. Bevorzugt liegt die Phasenübergangstemperatur im Bereich von 2°C-15°C.

Die Latentwärmespeicherschicht umfasst bevorzugt als flächige chemische Latentwärmespeicher ausgebildete Phasenwechselmaterialelemente, wobei bezüglich des den Latentwärmespeicher bildenden Mediums herkömmliche Ausbildungen verwendbar sind. Bevorzugte Medien für die Latentwärmespeicher sind Paraffine und Salzmischungen.

Gemäß einer bevorzugten Ausbildung umfasst jede Wand des Transportbehälters wenigstens einen flächigen chemischen Latentwärmespeicher, sodass der Innenraum bevorzugt vollständig von Phasenwechselmaterial umgeben ist. Alternativ kann ein Latentwärmespeicher den Innenraum nur teilweise umgeben, wobei wenigstens eine mit dem Latentwärmespeicher in Kontakt stehende Energieverteilschicht aus einem Material mit einer Wärmeleitfähigkeit von > 100 W/(m.K), insbesondere > 200 W/(m.K), vorgesehen sein kann, welche für eine Wärmeverteilung über den gesamten Umfang des Innenraums sorgt. Vorzugsweise besteht die wenigstens eine Energieverteilschicht zumindest teilweise, insbesondere vollständig, aus Aluminium, Kupfer oder Kohlenstoff-Nanoröhrchen.

Im Folgenden werden die der Erfindung zugrunde liegenden physikalischen Zusammenhänge anhand eines Ausführungsbeispiels näher erläutert.

Nach dem Energieerhaltungssatz führt eine Wärmeübertragung ($Q_i$) zu einer Änderung der Inneren Energie ($\Delta U$) des Transportbehälters:

$$\Delta U = Q_i \tag{1}$$

Die Änderung der Inneren Energie des leeren Transportbehälters wird mit guter Näherung durch Gleichung (2) beschrieben.

$$\Delta U = m_{PCM} \cdot \int c_{PCM}(T) \cdot dT + C_s \cdot \Delta T \tag{2}$$

Dabei ist $c_{PCM}(T)$ die temperaturabhängige spezifische Wärmekapazität des Phasenwechselmaterials. $C_s$ die temperaturunabhängige Wärmekapazität der anderen Bauteile des Transportbehälters (Isolation, Strukturteile), welche mit Hilfe einer Validierungsmessung bestimmt und für andere Behälter übertragbar ist.
Der Wärmeeintrag in den Behälter kann vereinfacht mit Gleichung (3) berechnet werden.

$$Q_i = f \cdot A_{ref} \cdot \frac{\lambda_{iso}}{d_{iso}} \cdot \int [T_{amb}(t) - T_i(t)] \cdot dt \tag{3}$$

Hier stellt f einen Korrekturfaktor dar, der über Validierungsmessungen bestimmt wird und auf andere Transportbehälter übertragbar ist.
Der Phasenwechsel des Latentwärmespeichers liegt üblicherweise innerhalb des Betriebsintervalls des entsprechenden Behälters. Somit ergibt sich in diesem Temperaturbereich ein Maximum in der Verteilung der spezifischen Wärmekapazität des Phasenwechselmaterials. Außerhalb dieses Bereiches ist die spezifische Wärmekapazität des Phasenwechselmaterials nahezu konstant und sehr gut bekannt (siehe Fig. 1). Daher eignet sich dieser Bereich gut für eine Berechnung der Wärmeleitfähigkeit der Isolation mit Gleichung (4).

$$\lambda_{iso} = \frac{(m_{PCM} \cdot c_{PCM} + C_s) \cdot [T_i(t_2) - T_i(t_1)] \cdot d_{iso}}{f \cdot A_{ref} \cdot \int_{t_1}^{t_2} [T_{amb}(t) - T_i(t)] \cdot dt} \tag{4}$$

Da $c_{PCM}(T)$ im betrachteten Temperaturbereich konstant ist, vereinfacht sich das Integral in Gleichung (2) zu $c_{PCM} \cdot \Delta T$. Ein Beispiel: Der typische Betriebstemperaturbereich eines Transportbehälters für die Pharmaindustrie liegt bei 2-8°C. Ein geeignetes Phasenwechselmaterial sollte ein Maximum der spezifischen Wärmekapazität bei etwa 5°C aufweisen. Ein geeigneter Temperaturbereich für die Messung der Wärmeleitfähigkeit nach Gleichung (4) wäre also z.B. 10-15°C. Die Messung wird bei einer Temperatur von 10°C zum Zeitpunkt $t_1$ automatisch gestartet. Sobald die Temperatur im Inneren des Behälters einen Wert von 15°C aufweist, wird die Messung zum Zeitpunkt $t_2$ gestoppt und mit Gleichung (4) ausgewertet.
Mit Hilfe der nun bekannten Wärmeleitfähigkeit der Isolation kann die Enthalpie des Latentwärmespeichers mit Gleichung (5) berechnet werden. Dazu muss der gewünschte Temperaturbereich innerhalb des Betriebstemperaturintervals des Behälters durchfahren werden, so dass ein Phasenwechsel stattfindet.

$$h_{PCM}\big|_{T_i(t_3) \to T_i(t_4)} = \frac{1}{m_{PCM}} \cdot \left[ f \cdot A_{ref} \cdot \frac{\lambda_{iso}}{d_{iso}} \cdot \int_{t_3}^{t_4} [T_{amb}(t) - T_i(t)] \cdot dt - C_s \cdot [T_i(t_4) - T_i(t_3)] \right] \tag{5}$$

Im obigen Beispiel wäre ein Temperaturintervall von 2-8°C denkbar. Die Messung wird gestartet bei einer Temperatur von 2°C zum Zeitpunkt $t_3$ und läuft bis eine Temperatur von 8°C erreicht wurde (Zeitpunkt $t_4$).

| Symbol | Einheit | Beschreibung |
|---|---|---|
| $A_{ref}$ | [m²] | Referenzoberfläche $A_{ref} = A_{innen} + 0.3 \cdot (A_{aussen} - A_{innen})$ |
| $c_{PCM}$ | [J/kgK] | Spezifische Wärmekapazität des Phasenwechselmaterials |
| $C_s$ | [J/K] | Wärmekapazität der Strukturteile und Isolation des Transportbehälters |
| $d_{iso}$ | [m] | Wandstärke der Isolationsschicht |
| $f$ | [-] | Korrekturfaktor auf Wärmeeintrag - Aus Validierungsmessungen |

(fortgesetzt)

| Symbol | Einheit | Beschreibung |
|---|---|---|
| $h_{PCM}$ | [J/kg] | Spezifische Enthalpie des Phasenwechselmaterials |
| $\lambda_{iso}$ | [W/mK] | Wärmeleitfähigkeit der Isolationsschicht |
| $m_{PCM}$ | [kg] | Masse des Phasenwechselmaterials |
| $Q_i$ | [W] | Energieeintrag |
| $T_{amb}$ | [K] | Umgebungstemperatur |
| $T_i$ | [K] | Temperatur im inneren des Transportbehälters |
| t | [s] | Zeit |
| $t_1$ | [s] | Startzeitpunkt zur Messung der Wärmeleitfähigkeit der Isolation |
| $t_2$ | [s] | Endzeitpunkt zur Messung der Wärmeleitfähigkeit der Isolation |
| $t_3$ | [s] | Startzeitpunkt zur Messung der Enthalpie des Phasenwechselmaterials |
| $t_4$ | [s] | Endzeitpunkt zur Messung der Enthalpie des Phasenwechselmaterials |
| $\Delta U$ | [W] | Änderung der Inneren Energie des Transportbehälters |

Ein für die Durchführung der Erfindung geeigneter Transportbehälter wird anhand der Fig. 2 näher erläutert, welche eine Schnittdarstellung des Transportbehälters zeigt. Der Transportbehälter umfasst eine quaderförmige Wandung 1, welche den Innenraum des Transportbehälters umschließt. An einer (nicht dargestellten) Vorderseite des Transportbehälters ist eine Tür vorgesehen, über welche der Innenraum be- und entladen werden kann. Die Wandung 1 umfasst eine thermische Isolationsschicht 2 aus einem Material mit einer Wärmeleitfähigkeit von < 0,02 W/(m.K), bevorzugt < 0,012 W/(m.K), wie z.B. aus Vakuumdämmplatten. An der dem Innenraum zugewandten Seite der Isolationsschicht 2 ist eine Latentwärmespeicherschicht 3 angeordnet, welche ein Phasenwechselmaterial umfasst. Für die Messung der Innenraumtemperatur ist an der dem Innenraum zugewandten Seite der Latentwärmespeicherschicht 3 ein Innentemperatursensor 4 angeordnet. Für die Messung der Umgebungstemperatur ist an der Außenseite des Transportbehälters ein Außentemperatursensor 5 angeordnet. Die Messsignale des Innentemperatursensors 4 und des Außentemperatursensors 5 sind einem nicht dargestellten Messwertspeicher bzw. einer Recheneinheit zugeführt, in der die erfindungsgemäße Ermittlung der Wärmeleitfähigkeit der Isolationsschicht und der Enthalpie des Phasenwechselmaterials erfolgt.

## Patentansprüche

1. Verfahren zur Überwachung der thermischen Leistungsfähigkeit eines temperaturkontrollierten Transportbehälters, wobei der Transportbehälter eine Behälterwandung (1) und einen von der Behälterwandung (1) umgebenen Innenraum aufweist, wobei die Behälterwandung (1) eine den Innenraum allseitig umgebende thermische Isolationsschicht (2) und eine Latentwärmespeicherschicht (3) umfasst, wobei die Latentwärmespeicherschicht (3) ein Phasenwechselmaterial mit einer Phasenwechseltemperatur aufweist, und wobei ein Außentemperatursensor (5) für die Messung der Umgebungstemperatur des Transportbehälters und ein Innentemperatursensor (4) für die Messung der Innenraumtemperatur vorgesehen sind, **dadurch gekennzeichnet, dass** die Umgebungstemperatur und die Innenraumtemperatur während eines ersten Zeitraums gemessen und aufgezeichnet werden, in dem die Innenraumtemperatur einen ersten Temperaturbereich durchläuft, und die Umgebungstemperatur und die Innenraumtemperatur während eines zweiten Zeitraums gemessen und aufgezeichnet werden, in dem die Innenraumtemperatur einen zweiten Temperaturbereich durchläuft, wobei die Phasenwechseltemperatur im ersten Temperaturbereich liegt und der zweite Temperaturbereich oberhalb oder unterhalb des ersten Temperaturbereichs liegt, wobei aus der zeitlichen Änderung der Innenraumtemperatur relativ zur Umgebungstemperatur während des Durchlaufens des zweiten Temperaturbereichs die Wärmeleitfähigkeit der Isolationsschicht errechnet wird und wobei danach aus der zeitlichen Änderung der Innenraumtemperatur relativ zur Umgebungstemperatur während des Durchlaufens des ersten Temperaturbereichs und aus der Wärmeleitfähigkeit der Isolationsschicht die Enthalpie des Phasenwechselmaterials errechnet wird.

2. Verfahren nach Anspruch 1, **dadurch gekennzeichnet, dass** als zweiter Temperaturbereich ein Bereich gewählt wird, in dem die spezifische Wärmekapazität des Phasenwechselmaterials im Wesentlichen konstant ist.

3. Verfahren nach Anspruch 1 oder 2, **dadurch gekennzeichnet, dass** sich der erste Temperaturbereich von einer Temperatur von 1-4°C unterhalb der Phasenwechseltemperatur bis zu einer Temperatur von 1-4°C oberhalb der Phasenwechseltemperatur erstreckt.

4. Verfahren nach Anspruch 1, 2 oder 3, **dadurch gekennzeichnet, dass** der zweite Temperaturbereich bei ansteigender Innenraumtemperatur durchlaufen wird.

5. Verfahren nach einem der Ansprüche 1 bis 4, **dadurch gekennzeichnet, dass** die Errechnung der Wärmeleitfähigkeit der Isolationsschicht mit der Formel

$$\lambda_{iso} = \frac{(m_{PCM} \cdot c_{PCM} + C_s) \cdot [T_i(t_2) - T_i(t_1)] \cdot d_{iso}}{f \cdot A_{ref} \cdot \int_{t_1}^{t_2}[T_{amb}(t) - T_i(t)] \cdot dt}$$

erfolgt, mit folgenden Bedeutungen:

$m_{PCM}$: Masse des Phasenwechselmaterials [kg]
$c_{PCM}$: Spezifische Wärmekapazität des Phasenwechselmaterials [J/kg·K]
$C_s$: Wärmekapazität der Strukturteile und der Isolation des Transportbehälters [J/K]
$T_i(t_2)$: Innentemperatur am Ende des zweiten Temperaturbereichs [K]
$T_i(t_1)$: Innentemperatur am Anfang des zweiten Temperaturbereichs [K]
$d_{iso}$: Wandstärke der Isolationsschicht [m]
f: Korrekturfaktor auf Wärmeeintrag
$A_{ref}$: Referenzoberfläche $A_{ref}=A_{innen}+0,3\cdot(A_{aussen}-A_{innen})$ [m²]
$T_{amb}$: Umgebungstemperatur [K]

6. Verfahren nach Anspruch 5, **dadurch gekennzeichnet, dass** die Errechnung der Enthalpie des Phasenwechselmaterials mit der Formel

$$h_{PCM} \mid _{T_i(t_3) \to T_i(t_4)} = \frac{1}{m_{PCM}} \cdot \left[ f \cdot A_{ref} \cdot \frac{\lambda_{iso}}{d_{iso}} \cdot \int_{t_3}^{t_4} [T_{amb}(t) - T_i(t)] \cdot dt - C_s \cdot [T_i(t_4) - T_i(t_3)] \right]$$

erfolgt, mit folgenden Bedeutungen:

$h_{PCM}$: Spezifische Wärmekapazität des Phasenwechselmaterials
$T_i(t_4)$: Innentemperatur am Ende des ersten Temperaturbereichs [K]
$T_i(t_3)$: Innentemperatur am Anfang des ersten Temperaturbereichs [K]

7. System zur Überwachung der thermischen Leistungsfähigkeit eines temperaturkontrollierten Transportbehälters, zur Durchführung eines Verfahrens nach einem der Ansprüche 1 bis 6, umfassend

- einen Transportbehälter mit einer Behälterwandung (1) und einem von der Behälterwandung (1) umgebenen Innenraum, wobei die Behälterwandung (1) eine den Innenraum allseitig umgebende thermische Isolationsschicht (2) und eine Latentwärmespeicherschicht (3) umfasst, wobei die Latentwärmespeicherschicht (3) ein Phasenwechselmaterial mit einer Phasenwechseltemperatur aufweist, und wobei der Transportbehälter einen Außentemperatursensor (5) für die Messung der Umgebungstemperatur des Transportbehälters und ein Innentemperatursensor (4) für die Messung der Innenraumtemperatur aufweist, **dadurch gekennzeichnet, dass** der Transportbehälter einen Messwertspeicher aufweist, dem die Messwerte des Außentemperatursensors und des Innentemperatursensors zugeführt sind, die während eines ersten Zeitraums gemessen werden, in dem die Innenraumtemperatur einen ersten Temperaturbereich durchläuft, und die während eines zweiten Zeitraums gemessen werden, in dem die Innenraumtemperatur einen zweiten Temperaturbereich durchläuft, wobei die Phasenwechseltemperatur im ersten Temperaturbereich liegt und der zweite Temperaturbereich oberhalb oder unterhalb des ersten Temperaturbereichs liegt, und
- eine Recheneinheit zur Auswertung der Messdaten,

wobei der Transportbehälter und die Recheneinheit jeweils eine Datenübertragungsschnittstelle aufweisen, über welche die Messwerte aus dem Messwertspeicher des Transportbehälters an die Recheneinheit übermittelt werden, und wobei die Recheneinheit eingerichtet ist, um aus der zeitlichen Änderung der Innenraumtemperatur relativ zur Umgebungstemperatur während des Durchlaufens des zweiten Temperaturbereichs die Wärmeleitfähigkeit der Isolationsschicht (2) zu errechnen und danach aus der zeitlichen Änderung der Innenraumtemperatur relativ zur Umgebungstemperatur während des Durchlaufens des ersten Temperaturbereichs und aus der Wärmeleitfähigkeit der Isolationsschicht (2) die Enthalpie des Phasenwechselmaterials zu errechnen.

## Claims

1. A method for monitoring the thermal performance of a temperature-controlled transport container, wherein the transport container includes a container wall (1) and an interior surrounded by the container wall (1), wherein the container wall (1) comprises a thermal insulation layer (2) surrounding the interior on all sides and a latent heat storage layer (3), wherein the latent heat storage layer (3) includes a phase change material having a phase change temperature, and wherein an external temperature sensor (5) for measuring the ambient temperature of the transport container and an internal temperature sensor (4) for measuring the interior temperature are provided, **characterized in that** the ambient temperature and the interior temperature are measured and recorded during a first period of time in which the interior temperature passes through a first temperature range, and the ambient temperature and the interior temperature are measured and recorded during a second period of time in which the interior temperature passes through a second temperature range, wherein the phase change temperature is within the first temperature range and the second temperature range is above or below the first temperature range, wherein the thermal conductivity of the insulation layer is calculated based on the temporal change of the interior temperature relative to the ambient temperature while passing through the second temperature range and wherein subsequently the enthalpy of the phase change material is calculated based on the temporal change of the interior temperature relative to the ambient temperature while passing through the first temperature range and based on the thermal conductivity of the insulation layer.

2. The method according to claim 1, **characterised in that** a range in which the specific heat capacity of the phase change material is substantially constant is selected as the second temperature range.

3. The method according to claim 1 or 2, **characterised in that** the first temperature range extends from a temperature of 1-4°C below the phase change temperature to a temperature of 1-4°C above the phase change temperature.

4. The method according to claim 1, 2 or 3, **characterised in that** the second temperature range is passed through with increasing interior temperature.

5. The method according to any one of claims 1 to 4, **characterised in that** the calculation of the thermal conductivity of the insulation layer is carried out with the formula,

$$\lambda_{iso} = \frac{(m_{PCM} \cdot c_{PCM} + C_s) \cdot [T_i(t_2) - T_i(t_1)] \cdot d_{iso}}{f \cdot A_{ref} \cdot \int_{t_1}^{t_2} [T_{amb}(t) - T_i(t)] \cdot dt}$$

with the following meanings:

$m_{PCM}$: Mass of phase change material [kg]
$c_{PCM}$: Specific heat capacity of the phase change material [J/kg·K]
$C_s$: Heat capacity of the structural parts and of the insulation of the transport container [J/K]
$T_i(t_2)$: Internal temperature at the end of the second temperature range [K]
$T_i(t_1)$: Internal temperature at the beginning of the second temperature range [K]
$d_{iso}$: Wall thickness of the insulation layer [m]
$f$: Correction factor for heat input
$A_{ref}$: Reference surface area $A_{ref} = A_{inside} + 0.3 (A_{outside} - A_{inside})$ [m²]
$T_{amb}$: Ambient temperature [K]

6. The method according to claim 5, **characterised in that** the calculation of the enthalpy of the phase change material is carried out with the formula

$$h_{PCM} \mid_{T_i(t_3) \to T_i(t_4)} = \frac{1}{m_{PCM}} \cdot \left[ f \cdot A_{ref} \cdot \frac{\lambda_{iso}}{d_{iso}} \cdot \int_{t_3}^{t_4} [T_{amb}(t) - T_i(t)] \cdot dt - C_s \cdot [T_i(t_4) - T_i(t_3)] \right]$$

with the following meanings:

$h_{PCM}$: Specific heat capacity of the phase change material
$T_i(t_4)$: Internal temperature at the end of the first temperature range [K]
$T_i(t_3)$: Internal temperature at the beginning of the first temperature range [K]

7. A system for monitoring the thermal performance of a temperature-controlled transport container for carrying out a method according to any one of claims 1 to 6, comprising

- a transport container with a container wall (1) and an interior surrounded by the container wall (1), wherein the container wall (1) comprises a thermal insulation layer (2) surrounding the interior on all sides and a latent heat storage layer (3), wherein the latent heat storage layer (3) includes a phase change material having a phase change temperature, and wherein the transport container comprises an external temperature sensor (5) for measuring the ambient temperature of the transport container and an internal temperature sensor (4) for measuring the interior temperature, **characterised in that** the transport container comprises a measured value memory to which the measured values of the external temperature sensor and the internal temperature sensor are supplied, which are measured during a first time period in which the interior temperature passes through a first temperature range, and which are measured during a second time period in which the interior temperature passes through a second temperature range, wherein the phase change temperature is within the first temperature range and the second temperature range is above or below the first temperature range, and
- a computing unit for evaluating the measurement data, wherein the transport container and the computing unit each include a data transmission interface, via which the measured values are transmitted from the measured value memory of the transport container to the computing unit, and wherein the computing unit is configured to calculate the thermal conductivity of the insulation layer (2) based on the temporal change of the interior temperature relative to the ambient temperature while passing through the second temperature range and subsequently to calculate the enthalpy of the phase change material based on the temporal change of the interior temperature relative to the ambient temperature while passing through the first temperature range and based on the thermal conductivity of the insulation layer (2).

**Revendications**

1. Procédé de surveillance de la performance thermique d'un conteneur de transport à température contrôlée, le conteneur de transport comprenant une paroi de conteneur (1) et un espace intérieur entouré par la paroi de conteneur (1), la paroi de conteneur (1) comprenant une couche d'isolation thermique (2) entourant l'espace intérieur de tous côtés et une couche d'accumulation de chaleur latente (3), la couche d'accumulation de chaleur latente (3) comprenant un matériau à changement de phase avec une température de changement de phase, et un capteur de température extérieure (5) étant prévu pour mesurer la température ambiante du conteneur de transport et un capteur de température intérieure (4) étant prévu pour mesurer la température de l'espace intérieur,
**caractérisé en ce que**
la température ambiante et la température de l'espace intérieur sont mesurées et enregistrées pendant une première période au cours de laquelle la température de l'espace intérieur traverse une première plage de température, et la température ambiante et la température de l'espace intérieur sont mesurées et enregistrées pendant une deuxième période au cours de laquelle la température de l'espace intérieur traverse une deuxième plage de température, la température de changement de phase se situant dans la première plage de température et la deuxième plage de température se situant au-dessus ou au-dessous de la première plage de température, dans lequel la conductivité thermique de la couche d'isolation est calculée à partir du changement temporel de la température de l'espace intérieur par rapport à la température ambiante pendant la traversée de la deuxième plage de température et dans lequel ensuite l'enthalpie du matériau à changement de phase est calculée à partir du changement temporel de la température de l'espace intérieur par rapport à la température ambiante pendant la traversée de la première plage de température et à partir de la conductivité thermique de la couche d'isolation.

2. Procédé selon la revendication 1, **caractérisé en ce qu'**une plage dans laquelle la capacité thermique spécifique du matériau à changement de phase est sensiblement constante est choisie comme deuxième plage de température.

3. Procédé selon la revendication 1 ou 2, **caractérisé en ce que** la première plage de température s'étend d'une température de 1-4 °C en dessous de la température de changement de phase jusqu'à une température de 1-4 °C au-dessus de la température de changement de phase.

4. Procédé selon la revendication 1, 2 ou 3, **caractérisé en ce que** la deuxième plage de température est traversée lorsque la température de l'espace intérieur augmente.

5. Procédé selon l'une des revendications 1 à 4, **caractérisé en ce que** le calcul de la conductivité thermique de la couche d'isolation est effectué avec la formule

$$\lambda_{iso} = \frac{(m_{PCM} \cdot c_{PCM} + C_s) \cdot [T_i(t_2) - T_i(t_1)] \cdot d_{iso}}{f \cdot A_{ref} \cdot \int_{t_1}^{t_2} [T_{amb}(t) - T_i(t)] \cdot dt}$$

avec les significations suivantes:

$m_{PCM}$: Masse du matériau à changement de phase [kg]
$C_{PCM}$: Capacité thermique spécifique du matériau à changement de phase [J/kg·K]
$C_s$: Capacité thermique des éléments structurels et de l'isolation du conteneur de transport [J/K]
$T_i(t_2)$: Température intérieure à la fin de la deuxième plage de température [K]
$T_i(t_1)$: Température intérieure au début de la deuxième plage de température [K]
$d_{iso}$: Épaisseur de paroi de la couche d'isolation [m]
f: Facteur de correction sur l'apport de chaleur
$A_{ref}$: Surface de référence $A_{ref}=A_{intérieur}+0,5*(A_{extérieur}-A_{intérieur})$ [m$^2$]
$T_{amb}$: Température ambiante [K]

6. Procédé selon la revendication 5, **caractérisé en ce que** le calcul de l'enthalpie du matériau à changement de phase est effectué avec la formule

$$h_{PCM} \mid _{T_i(t_3) \rightarrow T_i(t_4)} = \frac{1}{m_{PCM}} \cdot \left[ f \cdot A_{ref} \cdot \frac{\lambda_{iso}}{d_{iso}} \cdot \int_{t_3}^{t_4} [T_{amb}(t) - T_i(t)] \cdot dt - C_s \cdot [T_i(t_4) - T_i(t_3)] \right]$$

avec les significations suivantes:

$h_{PCM}$: Capacité thermique spécifique du matériau à changement de phase
$T_i(t_4)$: Température intérieure à la fin de la première plage de température [K]
$T_i(t_3)$: Température intérieure au début de la première plage de température [K]

7. Système de surveillance de la performance thermique d'un conteneur de transport à température contrôlée, pour la mise en œuvre d'un procédé selon l'une des revendications 1 à 6, comprenant

- un conteneur de transport avec une paroi de conteneur (1) et un espace intérieur entouré par la paroi de conteneur (1), la paroi de conteneur (1) comprenant une couche d'isolation thermique (2) entourant l'espace intérieur de tous côtés et une couche d'accumulation de chaleur latente (3), la couche d'accumulation de chaleur latente (3) comprenant un matériau à changement de phase avec une température de changement de phase, et le conteneur de transport comprenant un capteur de température extérieure (5) pour mesurer la température ambiante du conteneur de transport et un capteur de température intérieure (4) pour mesurer la température de l'espace intérieur,
**caractérisé en ce que**

le conteneur de transport comprend une mémoire de valeurs mesurées à laquelle sont fournies les valeurs mesurées du capteur de température extérieure et du capteur de température intérieure, qui sont mesurées pendant une première période au cours de laquelle la température de l'espace intérieur traverse une première plage de température, et qui sont mesurées pendant une deuxième période au cours de laquelle la température de l'espace intérieur traverse une deuxième plage de température, la température de changement de phase se situant dans la première plage de température et la deuxième plage de température se situant au-dessus ou au-dessous de la première plage de température, et

- une unité de calcul pour l'évaluation des données mesurées, dans lequel le conteneur de transport et l'unité de calcul comprennent chacun une interface de transmission de données par laquelle les valeurs mesurées sont transmises de la mémoire de valeurs mesurées du conteneur de transport à l'unité de calcul, et dans lequel l'unité de calcul est configurée pour calculer la conductivité thermique de la couche d'isolation (2) à partir du changement temporel de la température de l'espace intérieur par rapport à la température ambiante pendant la traversée de la deuxième plage de température et ensuite pour calculer l'enthalpie du matériau à changement de phase à partir du changement temporel de la température de l'espace intérieur par rapport à la température ambiante pendant la traversée de la première plage de température et à partir de la conductivité thermique de la couche d'isolation (2).

Fig 1.

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022054024 A1

**In der Beschreibung aufgeführte Nicht-Patentliteratur**

- Correction of the enthalpy-temperature curve of phase change materials obtained from the T-History method based on a transient heat conduction model. **TAN PEPE et al.** INTERNATIONAL JOURNAL OF HEAT AND MASS TRANSFER. ELSEVIER, 14 October 2016, vol. 105, 573-588